# EUROPEAN PATENT SPECIFICATION

(11) **EP 4 134 309 B1**
(45) Date of publication and mention of the grant of the patent: **20.11.2024**
(21) Application number: 21190975.9
(22) Date of filing: 12.08.2021
(51) Int. Cl.: B64D 11/00, B64D 13/00

(54) **ADJUSTABLE PASSENGER SERVICE UNIT ASSEMBLY, PASSENGER SERVICE CHANNEL AND VEHICLE**
EINSTELLBARE FAHRGASTBEDIENUNGSEINHEIT, FAHRGASTBEDIENUNGSKANAL UND FAHRZEUG
ENSEMBLE UNITÉ DE SERVICE PASSAGER RÉGLABLE, CANAL DE SERVICE PASSAGER ET VÉHICULE

(43) Date of publication of application: 15.02.2023
(73) Proprietor: Airbus Operations GmbH, 21129 Hamburg (DE)
(72) Inventor: Quatmann, Frank, 21129 Hamburg (DE); Carmona-Puga, Guillermo, 21129 Hamburg (DE); Gonzales Uribe, Carlos David, 417 55 Gothenburg (SE)
(74) Representative: Schornack, Oliver

(56) References cited:
- EP-A1- 0 716 014
- EP-A1- 2 801 523
- US-A- 5 707 028
- US-A1- 2009 283 633
- US-A1- 2015 232 182

## Description

The invention relates to a passenger service unit assembly that is easily adjustable in a longitudinal direction, a passenger service channel and a vehicle comprising the same. In particular, the invention relates to an adjustable passenger service unit assembly, wherein a portion of one passenger service unit is received in a recess of an adjacent passenger service unit, as well as a vehicle comprising such passenger service unit assembly.

In many transport vehicles for passengers, passenger dedicated service units, as disclosed in US 5 707 028 A, EP 2 801 523 A1 and US 2009/283633 A1, are arranged above passenger seats, which provide particular services to the passengers seating in the passenger seats. Specifically, such passenger service units may include reading lights, fresh air nozzles, an illuminated sign or (in case of an aircraft) oxygen masks and supply.

Since the distance between passenger seats in a longitudinal direction of the vehicle, such as the distance between two passenger seat rows, can usually be adjusted, for example to achieve a different leg space for different seating comfort classes or differently sized seats, the passenger service units need to be arranged at different positions in the longitudinal direction of the vehicle. Specifically, each passenger service unit needs to be arranged above such passenger seat or seat row, in order to be reachable and visible for the seating passenger(s).

This leads to different gaps between the passenger service units arranged along the longitudinal direction, which gaps have been filled with corresponding covers or panels. This, however, has the drawback that the passenger service units and covers or panels are often mounted in the passenger service channel at varying positions in a cross or width direction (substantially perpendicular to the longitudinal direction, i.e. a widthwise direction of the passenger service units) or move after mounting, for example due to movement of the vehicle. Thus, a gap at the longitudinal edge of the passenger service units and covers or panels has steps and prohibits a neat look of the vehicle.

It is therefore an object of the invention to provide a passenger service unit assembly, passenger service channel and vehicle facilitating installation of passenger service units in a straight and neat fashion.

This object is solved by a passenger service unit assembly with the features of claim 1, a passenger service channel with the features of claim 5, and a vehicle with the features of claim 7.

Preferred embodiments are defined by the dependent claims.

According to a first exemplary aspect to better understand the present disclosure, a passenger service unit assembly for a passenger transport vehicle comprises a first passenger service unit having a main body and at least one mount, a second passenger service unit having a main body and at least one mount, and at least one rail configured to couple with the at least one mount of the first and second passenger service units and to hold the first and second passenger service units.

The first and second passenger service units, therefore, are mounted to the at least one rail, so that the positions of the first and second passenger service units with respect to one another depend on the course of the at least one rail. Specifically, if the at least one rail is straight, and in case of multiple rails if they are straight and parallel to one another, the first and second passenger service units can be mounted without widthwise step at their longitudinally extending edges. The side surfaces or edges of the first and second passenger service units, hence, form a continuous surface or edge.

In addition, the main body of the first passenger service unit comprises a recess configured to and dimensioned to receive a portion of the main body of the second passenger service unit. In other words, a portion of the main body of the second passenger service unit can slide underneath the main body of the first passenger service unit, particularly into the recess of the first passenger service unit. This allows the main body of the first passenger service unit to cover the portion of the main body of the second passenger service unit. The first and second passenger service units can then be arranged along the at least one rail in a flexible manner, and can be adjusted along the longitudinal direction, for example, with respect to passenger seats arranged underneath the passenger service units.

Moreover, each passenger service unit is provided with such recess at a longitudinal end of the passenger service unit. The portion of the main body of the (second) passenger service unit configured to be received in such recess is provided at an opposite longitudinal end of the passenger service unit. Thus, a chain of passenger service units can be formed along the at least one rail, wherein the passenger service units are arranged next to one another and/or are arranged in an overlapping manner (in the longitudinal direction along the at least one rail), if one portion of passenger service unit is received in a recess of the correspondingly adjacent passenger service unit.

The slidable mounting of the first and second passenger service units along the at least one rail and the partially stacked first and second passenger service units allow a flexible and fast mountable plurality of passenger service units in a vehicle. Thus, in case the distance between two adjacent seats (in a longitudinal direction of the vehicle) or two adjacent seat rows has to be changed, the corresponding passenger service unit for each seat (row) can also be adjusted in a fast and flexible manner. The interior look of the vehicle, however, does not change or is not negatively affected, since no covers or panels are necessary and the passenger service units are mounted to rails, so that the side surfaces or edges of the passenger service units are flush to one another and continuous. It is further possible that only two (or three) passenger service units needs to be adjusted, if two adjacent seats (seat rows) are moved in a longitudinal direction of the vehicle. This is due to the overlapping installation manner of the two adjacent passenger service units.

In an implementation variant, the at least one mount of the first and second passenger service units can each be configured to slide along one of the at least one rail and to stepless fasten the respective first and second passenger service unit to the one rail. For example, the at least one rail may have a cross-sectional profile, along which the at least one mount can slide. Furthermore, the at least one mount can be configured to encompass at least a portion of the associated rail and/or to engage with a portion of the associated rail. As an example only, the at least one rail may have a cross-section in the form of a T-shape, U-shape, C-shape, L-shape or the like, while the at least one mount is arranged around this cross-sectional shape and/or inside this cross-sectional shape, particularly in case of the U-shape or C-shape. The fastening of the at least one mount to the associated rail may be achieved by a usual fastener, such as a screw, clamp or the like.

In another implementation variant, the first and second passenger service units can have any arbitrary number of mounts mounted to an arbitrary number of rails. For example, each passenger service unit can comprise two or four mounts, which are mounted to two rails, i.e. one or two mounts per rail. This allows a stable connection to the rail and, hence, to vehicle.

The recess is formed on a side of the main body facing the at least one rail. Since the at least one rail can be implemented in a manner, so that it is covered by the first and second passenger service units from being visible from an interior of the vehicle (from a passenger seat looking towards the passenger service units), the recess of the first passenger service unit may not be visible, too. In other words, a portion of the first passenger service unit, that is visible from an interior of the vehicle, covers the portion of the second passenger service unit, when the portion of the main body of the second passenger service unit is received in the recess of the first passenger service unit. Thus, the look of the first and second passenger service units is neat, since both passenger service units seem to form a continuous device.

For example, the recess may be dimensioned in such a manner that a surface of the main body of the second passenger service unit that is visible from the passenger seat contacts the main body of the first passenger service unit forming the recess. In other words, the first passenger service unit contacts the portion of the main body of the second passenger service unit where the recess is formed.

In a further implementation variant, the first and second passenger service units can each comprise a compartment for an oxygen mask and a flap closing the compartment. Such flap may automatically be opened, so that the oxygen mask can be reached and used by a passenger sitting below the passenger service unit. The portion of the main body of the second passenger service unit can further be dimensioned to completely fit into the recesses, so that at least the flap is not received in the recess. In other words, this portion the main body of the second passenger service unit has a length (in longitudinal direction of the at least one rail and/or vehicle) that is at least the same or larger than a length of the recess (also in longitudinal direction of the at least one rail and/or vehicle). The portion of the main body of the second passenger service unit does not include a portion of the flap, so that the first passenger service unit does not cover the flap and hinders it from operating (opening).

In yet a further implementation variant, the main body of the first and second passenger service units can each comprise at least one of a reading light, a service call button, a display, a fresh air nozzle, a loudspeaker and an illuminated sign. These passenger service devices can all be arranged in the part of the main body of the first and second passenger service units, that includes the recess, into which another passenger service unit may be received.

The main body comprises a plurality of movable sub-elements covered with a flexible skin, wherein the sub-elements are configured to be moved relative to one another in a direction substantially parallel to the at least one rail and to be fixed in a particular position with respect to one another. In other words, the main body or at least a portion thereof may be formed like a roller shutter that is extendable in length. This allows adjusting a length of the associated passenger service unit, so that additional flexibility in arranging the passenger service units with respect to one another as well as with respect to passenger seats or the like can be achieved. The flexible skin can be made from an elastic fabric or elastic foil or the like, which covers the sub-elements (shutter elements) as well as any gap between such sub-elements, once extended. The outer look of the passenger service unit, hence, is the same, while the length of the passenger service unit can be flexibly adjusted.

In another implementation variant, the at least one rail may be a one-piece element over the entire length of the passenger service unit assembly. Alternatively, at least two rail elements are mounted to one another, for example, are stuck together to form a continuous rail without gaps.

It is to be understood that the first and second passenger service units are formed in the same manner, i.e. both include a recess and both have a portion of a main body that can be received in the recess of an adjacent passenger service unit. Moreover, the passenger service unit assembly can comprise further passenger service units, i.e. more than two, which are each formed and shaped in the same manner as the first and second passenger service units described herein. Thus, the passenger service unit assembly can be manufactured of any desired length by mounting any desired number of passenger service units along the at least one rail.

According to a second exemplary aspect to better understand the present disclosure, a passenger service channel comprises a passenger service unit assembly according to the first aspect or one or more of its implementation variants. The first and second passenger service units of the passenger service unit assembly are arranged one after the other in a longitudinal direction of the passenger service channel. In other words, the at least one rail can be positioned in the passenger service channel along the longitudinal direction of the passenger service channel.

In addition, the first and second passenger service units, for example their respective main body, are sized and dimensioned to cover the passenger service channel in a widthwise direction (substantially perpendicular to the longitudinal direction of the passenger service channel). Thus, one passenger service unit covers a corresponding portion of the passenger service channel. By adjusting the position of the passenger service units to one another, particularly by moving the portion of the main body of one passenger service unit into the recesses of another passenger service unit, any number of passenger service units can be installed in the passenger service channel until the passenger service channel is completely closed.

In an implementation variant, the at least one rail of the passenger service unit assembly can each be configured to slide along the passenger service channel and is further configured to be fastened in a stepless manner relative to the passenger service channel. For instance, the mounting of the at least one rail relative to and/or inside of the passenger service channel can be achieved in a similar manner as the mounting of the passenger service unit to the at least one rail. This allows flexibly moving the rail relative to the passenger service channel as well as moving any of the passenger service units relative to the passenger service channel.

According to a third exemplary aspect to better understand the present disclosure, a vehicle comprising at least one passenger service unit assembly according to the first aspect and/or comprising at least one passenger service channel according to the second aspect or one or more of their respective implementation variants. As an example only, such vehicle can be an aircraft, a train, bus or a ship or any other vehicle configured to transport passengers.

The present disclosure is not restricted to the aspects and variants in the described form and order, rather it is defined according to the appended claims. Specifically, the description of aspects and variants is not to be understood as a specific limiting grouping of features. It is to be understood that the present disclosure also covers combinations of the aspects and variants not explicitly described, but which fall within the scope defined by the appended claims.

Preferred embodiments of the invention are now explained in greater detail with reference to the enclosed schematic drawings, in which
- Figures 1 and 2: schematically illustrate perspective views of passenger service units;
- Figure 3: schematically illustrates a perspective view of a passenger service unit assembly;
- Figures 4 and 5: schematically illustrate side views of a part of two adjacent passenger service units;
- Figure 6: schematically illustrates side views of a passenger service unit assembly in two different configurations;
- Figures 7 and 8: schematically illustrate side views of a part of two adjacent individually extendable passenger service units; and
- Figure 9: schematically illustrates a vehicle.

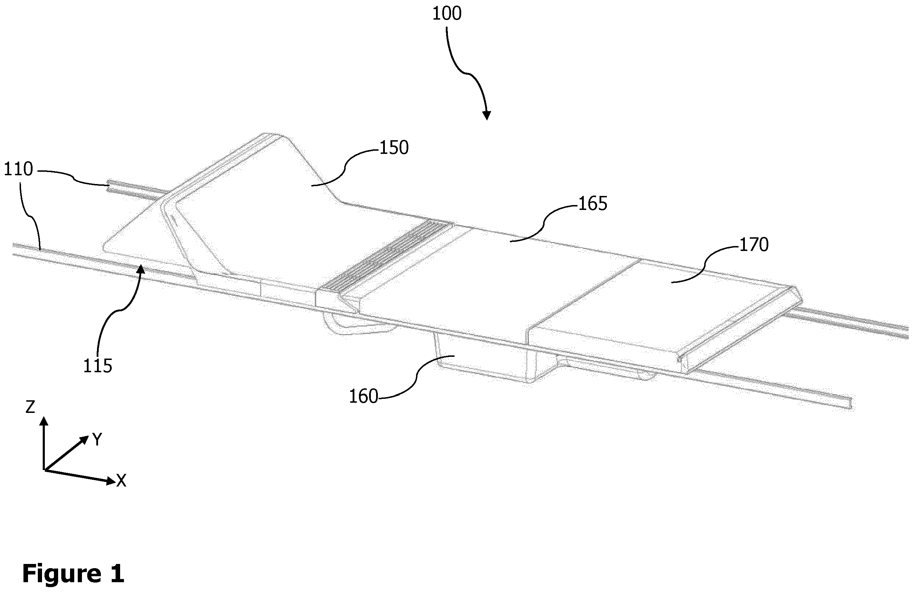

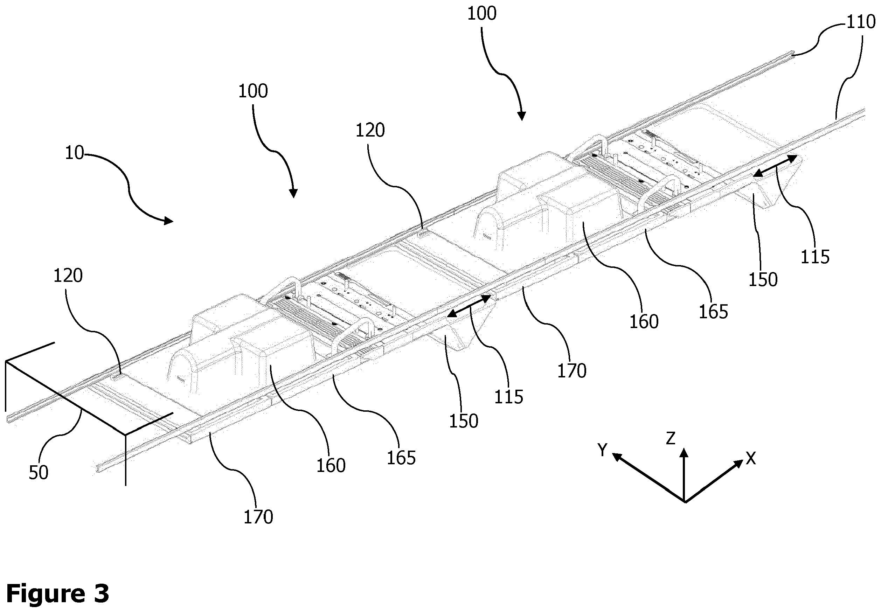

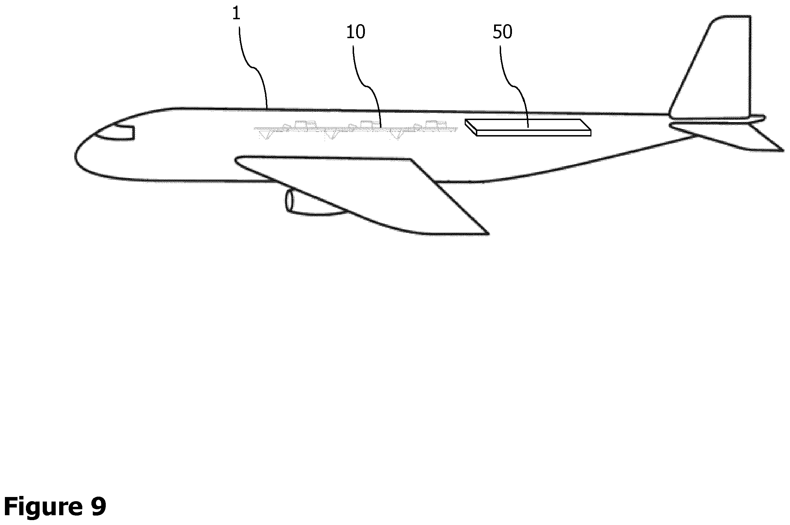

Figure 1 schematically illustrates a passenger service unit 100 that can form part of a passenger service unit assembly 10 (Figure 3). The passenger service unit 100 comprises a main body that has a first longitudinal end 150 and a second, opposite longitudinal end 170. The longitudinal direction of the passenger service unit 100 corresponds to the illustrated X-axis, which may correspond to a longitudinal direction of the vehicle (Figure 9) comprising such passenger service unit 100. The first end of the main body 150 can include at least one passenger (operable) device, such as a reading light, a service call button, a display, a fresh air nozzle, a loudspeaker and/or an illuminated sign or any number of such devices. Any such passenger device can also be provided at the opposite end 170 of the main body of the passenger service unit 100. Alternatively, the main body 170 at this end of the passenger service unit 100 may simply form a cover.

The passenger service unit 100 can be mounted to at least one rail 110, two of which are illustrated in Figure 1. This mounting may allow sliding the passenger service unit 100 along the at least one rail 110 and fasten the passenger service unit 100 to the rail 110 at any desirable position, i.e. in a stepless manner.

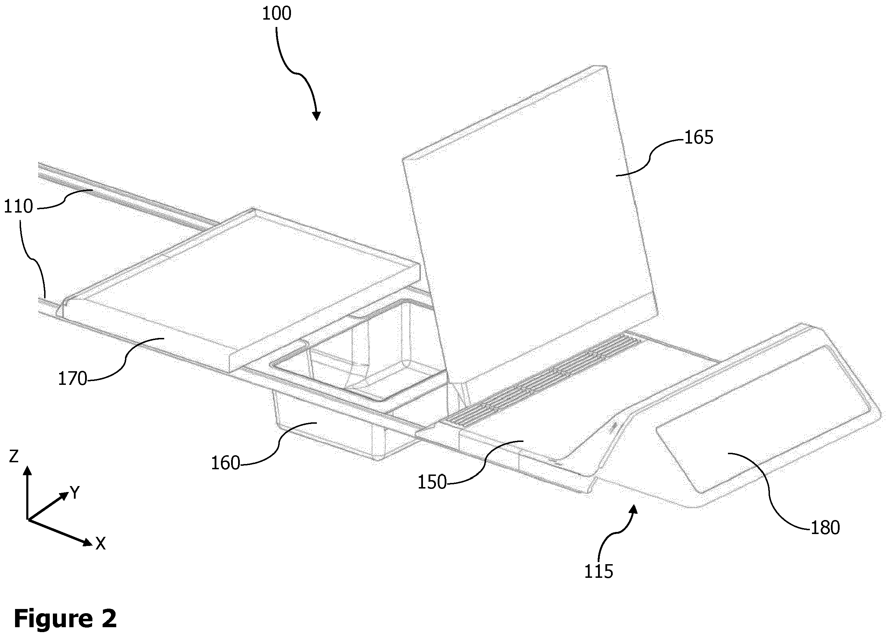

The passenger service unit 100 can optionally include a compartment 160, into which one or more oxygen masks (not illustrated) can be placed. The compartment 160 is closed by an associated flap 165. Figure 2 illustrates the passenger service unit 100 from an opposite view and with the flap 165 covering compartment 160 in an open state. Figure 2 further illustrates the passenger service unit 100 with a further passenger device 180. This can be an illuminated sign or the like.

It is to be understood that Figures 1 and 2 illustrate the passenger service unit 100 upside down compared to an installed state of the passenger service unit 100 and the at least one rail 110. Thus, the main surfaces of main body 150, 170 of the passenger service unit 100 (i.e. the surfaces of the main body 150, 170 visible in Figures 1 and 2) form a ceiling above passenger seats, where such passenger service unit 100 is usually installed. In other words, the illustrated Z-axis corresponds to a vertical axis, and the illustrated positive Z-axis points downwards from the passenger service unit 100 installed in a vehicle (Figure 9) towards any passenger seat installed below. Alternatively, the passenger service unit 100 may be installed in a side wall or side lining of the vehicle.

As is derivable from Figures 1 and 2, one end of the main body 150 (when viewed in a longitudinal direction, i.e. the X-axis) extends or protrudes away from the at least one rail 110. For example, this portion of the main body 150 may extend or protrude downwards in the Z-axis direction. The illustrated triangular shape of this extension or protrusion is only exemplary and this part of the main body 150 of the passenger service unit 100 may also have a square or rectangular, circular or elliptical cross-sectional shape (when viewed in a widthwise direction, i.e. viewed along the Y-axis). The extension or protrusion allows provision of a recess 115 in the main body 150 of the passenger service unit 100. The recess 115 is dimensioned to receive a portion of the main body 170 of another passenger service unit 100 as will be explained in more detail with respect to Figures 3 to 8. In other words, the recess 115 can span over the entire width (Y-axis direction) of the main body 150 of the passenger service unit 100. Alternatively, if the opposite end 170 of passenger service unit 100 has a different width, the recess 115 may not span over the entire width of the end 150 of the passenger service unit 100, but the recess 115 may be closed along the sides (in the Y-axis direction) of the main body 150. Likewise, the recess 115 can have a depth (Z-axis direction) corresponding to at least a height of the main body 170 of a passenger service unit 100.

Figure 3 schematically illustrates a perspective view of a passenger service unit assembly 10. This illustration shows the passenger service unit assembly 10 from above (when installed in the ceiling of the vehicle). The passenger service unit assembly 10 includes at least a first and a second passenger service unit 100. Both passenger service units 100 are mounted to the at least one rail 110 in an adjacent manner along the longitudinal direction (X-axis) of the at least one rail 110.

Furthermore, only schematically illustrated is a portion of a passenger service channel 50, into which the passenger service unit assembly 10 is installed. Such passenger service channel 50 can be formed by a bottom region of an overhead compartment, a bottom region of ceiling or any other interior component in a vehicle forming a ceiling or upper boundary of the region of the vehicle. The at least one rail 110 may be configured to slide along the passenger service channel 50 and to be mounted to the passenger service channel 50. For instance, a corresponding sliding mount (not illustrated) may be arranged inside of the passenger service channel 50, to which the at least one rail 110 can be fixed.

The first and second passenger service units 100 as illustrated in Figure 3 are in a position, where the recess 115 of the first passenger service unit 100 (to the left in Figure 3) is not occupied by the main body 170 of the second passenger service unit 100 (to the right in Figure 3). In other words, the distance between the first and the second passenger service units 100 has been set to a maximum, where the main body 170 of the second passenger service unit 100 is not received in the recess 115 of the first passenger service unit 100, but where no significant gap or space between both passenger service units 100 is formed. Thus, the passenger service channel 50 can be closed and the inside of the channel 50 is not visible or reachable from the interior of the vehicle.

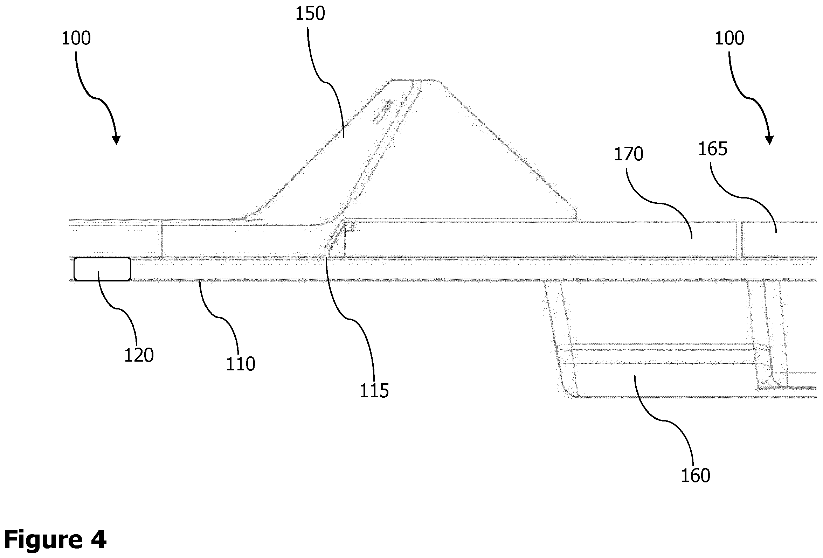

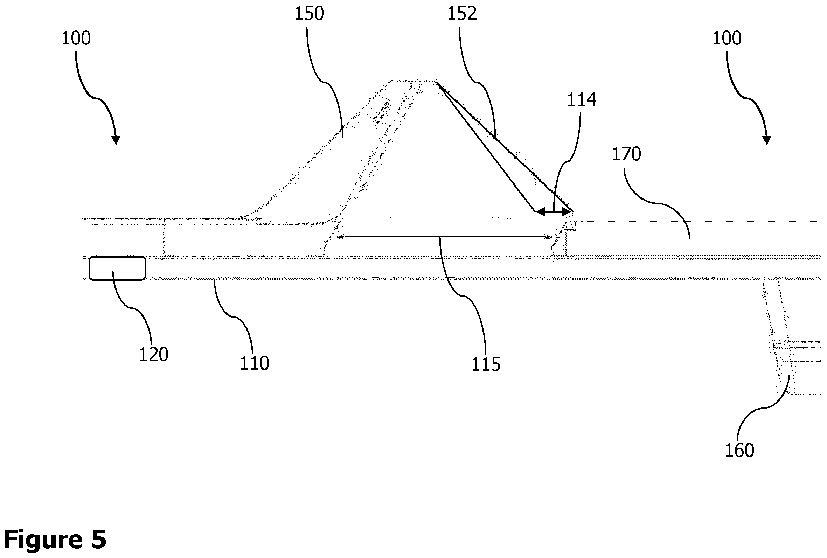

Figures 4 and 5 schematically illustrate side views of a part of two adjacent passenger service units 100. Figure 4 illustrates a position of the second passenger service unit 100 (to the right in Figure 4) where a portion of its main body 170 (i.e. it is longitudinal end opposite a recess 115) is completely received in the recess 115 of the first passenger service unit 100 (to the left in Figure 4). The illustrated recess 115 is drawn in Figure 4 to allow a differentiation between first and second passenger service unit 100. Of course, the main body 170 of the second passenger service unit 100 can but against an inner surface of the recess 115 of the first passenger service unit 100. Thus, the distance between first and second passenger service units 100 is reduced to the minimum distance between both units 100.

For example, a mount 120 may be loosened, so that the first passenger service unit 100 can be slid along the at least one rail 110. In Figure 5 the first passenger service unit 100 is moved to the left (or vice versa the second passenger service unit 100 is moved to the right) from the position shown in Figure 4 until the recess 115 is freed from the main body 170 of the second passenger service unit 100. Thereafter, the mount 120 can be fastened to the at least one rail 110 again, to fix the passenger service unit 100 to the at least one rail 110. It is to be understood that the recess 115 may be opened up to any variable space between first and second passenger service unit 100, particularly any relative position of the first and second passenger service units 100 between the illustrated positions of Figures 4 and 5.

As illustrated in Figure 5, a small overlap between the extending portion of the main body 150 (the rightmost longitudinal end) of the first passenger service unit 100 and the main body 170 (the leftmost longitudinal end) of the second passenger service unit 100 may still be present, in order to avoid a gap or space through which a passenger may see or even reach into a region of the passenger service channel 50 that should be covered by the first and second passenger service units 100. Of course, a small or open slit may be present, as long as no passenger can reach inside of the passenger service channel 50.

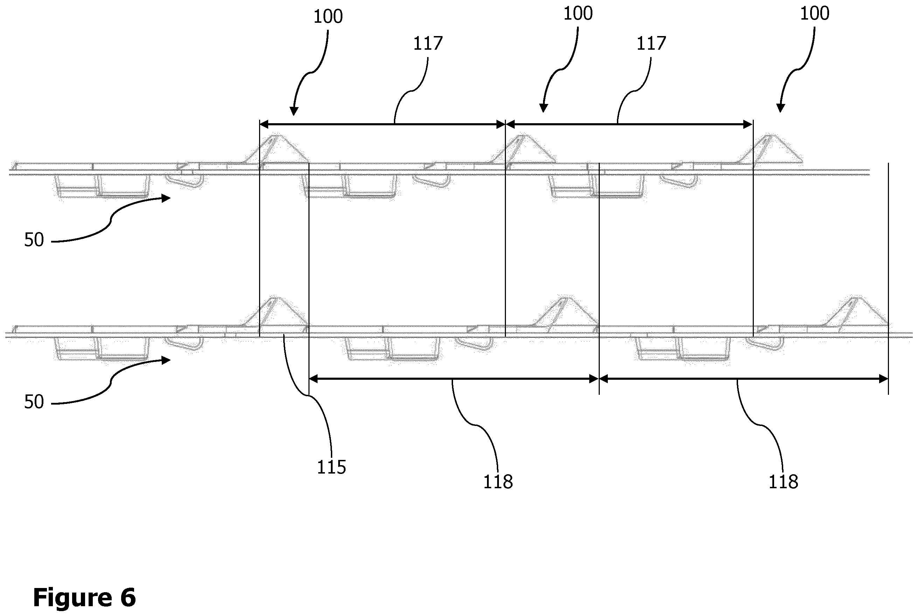

A side surface 152 at the longitudinal end of the first passenger service unit 100 may be arranged at a flat angle (as illustrated to the right in Figure 5) compared to a conventional passenger service unit 100. Specifically, a passenger service unit 100 usually comprises an extension or is built thicker and has an indent, to provide a slant surface. Such slant surface is necessary, to provide a visible surface from underneath, such as from the passenger seat, particularly to place any display or illuminated signs at this slanted surface. When providing a flatter angle of the side surface 152, the length of the recess 115 may be extended by a certain distance 114. This may allow to create a recess 115 of a size in longitudinal direction (X-axis) sufficiently large for the second passenger service unit 100 to move away from the first passenger service unit 100. For example, the maximum distance between first and second passenger service units 100 (i.e. the maximum extent of the recess 115 in the longitudinal direction) may correspond to a maximum adjustment of adjacent seats in the vehicle 1. As an example only, two seats (or seat rows) may have a distance between 28 and 33 inch (approximately 71 to 84 cm), so that the size of the recess 115 should be 5 inch (approximately 13 cm) in the longitudinal direction. Figure 6 schematically illustrates side views of a passenger service unit assembly 10 in two different configurations. In the upper illustrated configuration, the distance 117 between two adjacent passenger service units 100 may be 28 inch (approximately 71 cm). This may correspond to a seat pitch between adjacent seats in a longitudinal direction. Here, the recess 115 of one passenger service unit 100 is filled with (receives) a main body 170 of an adjacent passenger service unit 100 (as for example in Figure 4).

In the lower illustrated configuration of Figure 6, each passenger service unit is moved along the at least one rail 110 and out of the recess 115 of an adjacent passenger service unit 100 (see for example configuration of Figure 5). Thus, the distance 118 between two adjacent passenger service units 100 may be 33 inch (approximately 84 cm). This may also correspond to a seat pitch between adjacent seats in a longitudinal direction. Thus, the passenger service units 100 may be adapted in an easy and fast manner to any seat pitch.

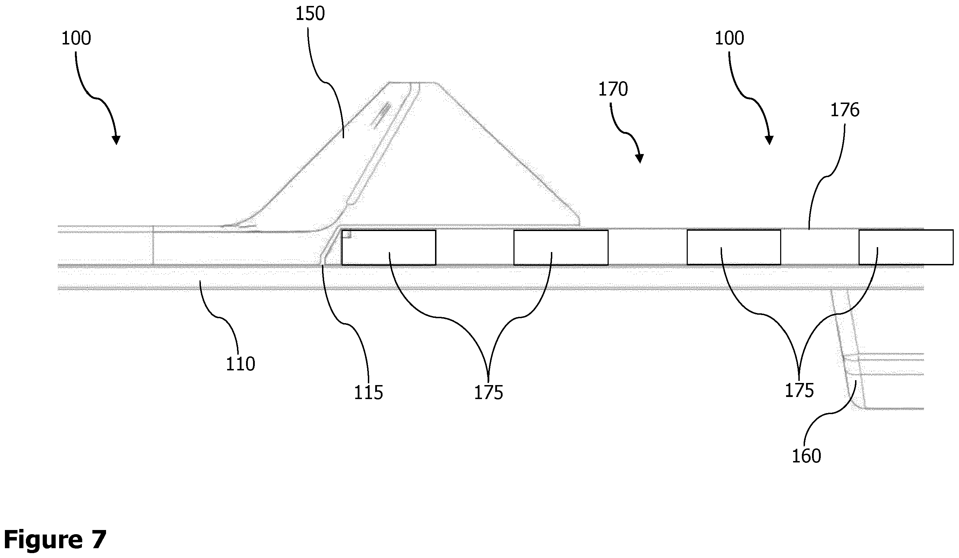

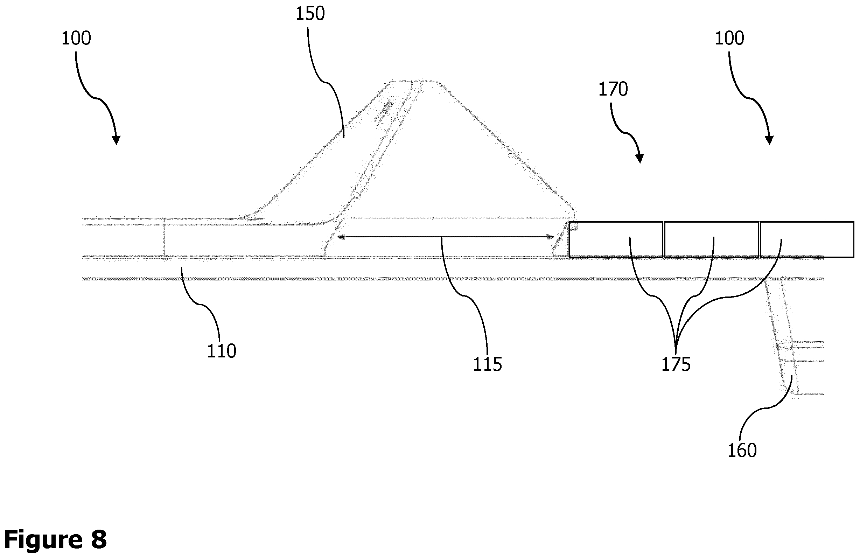

Figures 7 and 8 schematically illustrate side views of a part of two adjacent individually extendable passenger service units 100. For example, if a greater or smaller seat pitch and, hence, distance between adjacent passenger service units 100 is required, the passenger service units 100 of Figures 7 and 8 allow an additional extending of this distance. Specifically, the main body 170 of at least one of the passenger service units 100 comprises a plurality of movable sub-elements 175. These sub-elements 175 may be connected to one another along a rod or rail (not illustrated), so that they can be moved relative to one another in a direction substantially parallel to the at least one rail 110.

Figure 7 illustrates the sub-elements 175 in a spaced apart configuration. Thus, the main body 170 of the passenger service unit 100 can be extended in length (i.e. in longitudinal direction). Likewise, Figure 8 illustrates the sub-elements 175 in a pushed together configuration, i.e. the sub-elements 175 are moved relative to one another and may contact one another. Thus, the main body 170 may be shortened in the longitudinal direction.

Figures 7 and 8 also illustrate the longitudinal end of the main body 170 of the passenger service unit 100 inside and out of recess 115 (comparable to the configurations of Figures 4 and 5). It is to be understood that any combination of position of the longitudinal end of the main body 170 of the passenger service unit 100 with respect to the recess 115 and the spaced apart configuration as well as pushed together configuration of the sub-elements 175 is possible with the disclosed passenger service units 100. Thus, the distances 117, 118 between two adjacent passenger service units 100 (e.g., measured at the respective protruding end 150 of the main body of adjacent passenger service units 100) may be even smaller and higher as the values given above, i.e. may be smaller than 28 inch (approximately 71 cm) and greater than 33 inch (approximately 84 cm).

In order to close the gap or space between sub-elements 175, when in a spaced apart configuration, a flexible fabric or foil or other elastic sheet is provided on main body 170 of the passenger service unit 100, on the sub-elements 175. Thus, when the sub-elements 175 are moved relative to one another, the flexible or elastic cover moves with them, while maintaining a neat look of the main body 170 and, hence, of the passenger service unit 100.

Figure 9 schematically illustrates a vehicle 1. The vehicle 1 as illustrated is an aircraft, which comprises a passenger service unit assembly 10. Such passenger service unit assembly 10 may be installed inside of passenger service channel 50.

The above description of the drawings is to be understood as providing only exemplary embodiments of the present invention and shall not limit the invention to these particular embodiments.

## Claims

1. A passenger service unit assembly (10) for a passenger transport vehicle (1), the assembly (10) comprising:
a first passenger service unit (100) having a main body (150, 170) and at least one mount (120);
a second passenger service unit (100) having a main body (150, 170) and at least one mount (120); and
at least one rail (110) configured to couple with the at least one mount (120) of the first and second passenger service units (100) and to hold the first and second passenger service units (100),
wherein the main body (150) of the first passenger service unit (100) comprises a recess (115) at a longitudinal end of the first passenger service unit configured to and dimensioned to receive a portion of the main body (170) of the second passenger service unit (100) at a longitudinal end of the second passenger service unit (100),
wherein the recess (115) is formed on a side of the main body (150) facing the at least one rail (110), and the portion of the main body (150) of the first passenger service unit (100) forming the recess (115) overlaps the portion of the main body (170) of the second passenger service unit (100), and
**characterized in that** the portion of the main body (170) of the second passenger service unit (100) comprises a plurality of movable sub-elements (175) covered with a flexible skin (176), wherein the sub-elements (175) are configured to be moved relative to one another in a direction substantially parallel to the at least one rail (110) and to be fixed in a particular position with respect to one another.

2. The passenger service unit assembly (10) according to claim 1, wherein the at least one mount (120) of the first and second passenger service units (100) is each configured to slide along one of the at least one rail (110) and to stepless fasten the respective first and second passenger service unit (100) to the one rail (110).

3. The passenger service unit assembly (10) according to claim 1 or 2, wherein the first and second passenger service units (100) each comprises a compartment (160) for an oxygen mask and a flap (165) closing the compartment (160), and
wherein the portion of the main body (170) of the second passenger service unit (100) is dimensioned to completely fit into the recesses (115), so that at least the flap (165) is not received in the recess (115).

4. The passenger service unit assembly (10) according to one of claims 1 to 3, wherein the main body (150) of the first and second passenger service units (100) each comprises at least one of a reading light, a service call button, a display, a fresh air nozzle, a loudspeaker and an illuminated sign.

5. A passenger service channel (50) comprising a passenger service unit assembly (10) according to one of claims 1 to 4.

6. The passenger service channel (50) according to claim 5, wherein the at least one rail (110) of the passenger service unit assembly (10) is each configured to slide along the passenger service channel (50) and is further configured to be fastened in a stepless manner relative to the passenger service channel (50).

7. A vehicle (1) comprising at least one passenger service unit assembly (10) according to one of claims 1 to 4, and/or comprising at least one passenger service channel (50) according to claim 5 or 6.

## Patentansprüche

1. Fahrgastbedienungsanordnung (10) für ein Fahrgasttransportfahrzeug (1), wobei die Anordnung (10) Folgendes umfasst:
eine erste Fahrgastbedienungseinheit (100) mit einem Hauptkörper (150, 170) und mindestens einer Halterung (120);
eine zweite Fahrgastbedienungseinheit (100) mit einem Hauptkörper (150, 170) und mindestens einer Halterung (120); und
mindestens eine Schiene (110), die dazu ausgelegt ist, mit mindestens einer Halterung (120) der ersten und der zweiten Fahrgastbedienungseinheit (100) gekoppelt zu werden und die erste und die zweite Fahrgastbedienungseinheit (100) zu halten,
wobei der Hauptkörper (150) der ersten Fahrgastbedienungseinheit (100) eine Aussparung (115) an einem Längsende der ersten Fahrgastbedienungseinheit umfasst, die dazu ausgelegt ist, einen Abschnitt des Hauptkörpers (170) der zweiten Fahrgastbedienungseinheit (100) an einem Längsende der zweiten Fahrgastbedienungseinheit (100) aufzunehmen,
wobei die Aussparung (115) auf einer der mindestens einen Schiene (110) zugewandten Seite des Hauptkörpers (150) ausgebildet ist und der Abschnitt des Hauptkörpers (150) der ersten Fahrgastbedienungseinheit (100), der die Aussparung (115) bildet, den Abschnitt des Hauptkörpers (170) der zweiten Fahrgastbedienungseinheit (100) überlappt, und
**dadurch gekennzeichnet, dass** der Abschnitt des Hauptkörpers (170) der zweiten Fahrgastbedienungseinheit (100) eine Vielzahl von bewegbaren Unterelementen (175) aufweist, die mit einer flexiblen Haut (176) bedeckt sind, wobei die Unterelemente (175) dazu ausgelegt sind, relativ zueinander in einer Richtung bewegt zu werden, die im Wesentlichen parallel zu der mindestens einen Schiene (110) verläuft, und in einer bestimmten Position zueinander fixiert zu werden.

2. Fahrgastbedienungsanordnung (10) nach Anspruch 1, wobei die mindestens eine Halterung (120) der ersten und der zweiten Fahrgastbedienungseinheit (100) jeweils dazu ausgelegt ist, entlang einer der mindestens einen Schiene (110) zu gleiten und die erste und die zweite Fahrgastbedienungseinheit (100) jeweils stufenlos an der einen Schiene (110) zu befestigen.

3. Fahrgastbedienungsanordnung (10) nach Anspruch 1 oder 2, wobei die erste und die zweite Fahrgastbedienungseinheit (100) jeweils ein Fach (160) für eine Sauerstoffmaske und eine Klappe (165), die das Fach (160) schließt, umfasst, und wobei der Abschnitt des Hauptkörpers (170) der zweiten Fahrgastbedienungseinheit (100) so bemessen ist, dass er vollständig in die Aussparungen (115) passt, sodass zumindest die Klappe (165) nicht in der Aussparung (115) aufgenommen wird.

4. Fahrgastbedienungsanordnung (10) nach einem der Ansprüche 1 bis 3, wobei der Hauptkörper (150) der ersten und der zweiten Fahrgastbedienungseinheit (100) jeweils mindestens eine Leseleuchte, eine Serviceruftaste, ein Display, eine Frischluftdüse, einen Lautsprecher und ein beleuchtetes Zeichen umfasst.

5. Fahrgastbedienungskanal (50), umfassend eine Fahrgastbedienungsanordnung (10) nach einem der Ansprüche 1 bis 4.

6. Fahrgastbedienungskanal (50) nach Anspruch 5, wobei die mindestens eine Schiene (110) der Fahrgastbedienungsanordnung (10) jeweils dazu ausgelegt ist, entlang des Fahrgastbedienungskanals (50) zu gleiten, und ferner dazu ausgelegt ist, in Bezug auf den Fahrgastbedienungskanal (50) stufenlos befestigt zu werden.

7. Fahrzeug (1), das mindestens eine Fahrgastbedienungsanordnung (10) nach einem der Ansprüche 1 bis 4 umfasst und/oder mindestens einen Fahrgastbedienungskanal (50) nach Anspruch 5 oder 6 umfasst.

## Revendications

1. Ensemble d'unités de services passagers (10) pour un véhicule de transport de passagers (1), l'ensemble (10) comprenant :
une première unité de services passagers (100) ayant un corps principal (150, 170) et au moins un support (120) ;
une seconde unité de services passagers (100) ayant un corps principal (150, 170) et au moins un support (120) ; et
au moins un rail (110) configuré pour se coupler à l'au moins un support (120) des première et seconde unités de services passagers (100) et pour retenir les première et seconde unités de services passagers (100),
dans lequel le corps principal (150) de la première unité de services passagers (100) comprend un évidement (115) à une extrémité longitudinale de la première unité de services passagers, configuré pour et dimensionné pour recevoir une partie du corps principal (170) de la seconde unité de services passagers (100) à une extrémité longitudinale de la seconde unité de services passagers (100),
dans lequel l'évidement (115) est formé sur un côté du corps principal (150) faisant face à l'au moins un rail (110), et la partie du corps principal (150) de la première unité de services passagers (100) formant l'évidement (115) chevauche la partie du corps principal (170) de la seconde unité de services passagers (100), et
**caractérisé en ce que** la partie du corps principal (170) de la seconde unité de services passagers (100) comprend une pluralité de sous-éléments mobiles (175) couverte avec une enveloppe flexible (176), dans lequel les sous-éléments (175) sont configurés pour être déplacés les uns relativement aux autres dans une direction sensiblement parallèle à l'au moins un rail (110) et pour être fixés dans une position particulière les uns par rapport aux autres.

2. Ensemble d'unités de services passagers (10) selon la revendication 1, dans lequel l'au moins un support (120) des première et seconde unités de services passagers (100) est chacun configuré pour coulisser le long d'un de l'au moins un rail (110) et pour assembler de façon uniforme les première et seconde unités de services passagers respectives (100) à l'un rail (110).

3. Ensemble d'unités de services passagers (10) selon la revendication 1 ou 2, dans lequel les première et seconde unités de services passagers (100), comprennent chacune un compartiment (160) pour un masque à oxygène et un volet (165) fermant le compartiment (160), et
dans lequel la partie du corps principal (170) de la seconde unité de services passagers (100) est dimensionnée pour aller complètement dans les évidements (115), de telle sorte qu'au moins le volet (165) n'est pas reçu dans l'évidement (115).

4. Ensemble d'unités de services passagers (10) selon l'une des revendications 1 à 3, dans lequel le corps principal (150) des première et seconde unités de services passagers (100) comprend chacun au moins un d'une lampe de lecture, d'un bouton d'appel de service, d'un écran d'affichage, d'une buse d'air frais, d'un haut-parleur, et d'une signalisation illuminée.

5. Section de services passagers (50), comprenant un ensemble d'unités de services passagers (10) selon l'une des revendications 1 à 4.

6. Section de services passagers (50) selon la revendication 5, dans laquelle l'au moins un rail (110) de l'ensemble d'unités de services passagers (10) est chacun configuré pour coulisser le long de la section de services passagers (50) et est en outre configuré pour être assemblé de façon uniforme relativement à la section de services passagers (50).

7. Véhicule (1) comprenant au moins un ensemble d'unités de services passagers (10) selon l'une des revendications 1 à 4, et/ou comprenant au moins une section de services passagers (50) selon la revendication 5 ou 6.
